# EUROPÄISCHE PATENTSCHRIFT

(11) **EP 1 740 844 B1**
(45) Veröffentlichungstag und Bekanntmachung des Hinweises auf die Patenterteilung: **03.03.2010**
(21) Anmeldenummer: 05744754.2
(22) Anmeldetag: 21.04.2005
(51) Int. Cl.: F16D 65/095

(54) **SCHEIBENBREMSE**
DISC BRAKE
FREIN A DISQUE

(30) Priorität: 29.04.2004 DE 102004021126
(43) Veröffentlichungstag der Anmeldung: 10.01.2007
(73) Patentinhaber: Lucas Automotive GmbH, 56070 Koblenz (DE)
(72) Erfinder: HAUPT, Manfred, 56203 Höhr-Grenzhausen (DE); SCHOG, Michael, 56753 Mertloch (DE); HEES, Dirk, 56727 Mayen-Kürrenberg (DE)
(74) Vertreter: von Hellfeld, Axel
(86) Internationale Anmeldenummer: PCT/EP2005/004305
(87) Internationale Veröffentlichungsnummer: WO 2005/108817

(56) Entgegenhaltungen:
- DE-A1- 2 931 216
- US-A- 5 860 496
- US-A- 6 062 349

## Beschreibung

Die Erfindung betrifft eine Scheibenbremse mit einem am Fahrzeug befestigbaren Bremsträger, der Bolzen zur Führung eines Bremsbelages axial in Bezug auf eine Bremsscheibe aufweist, wobei der Bremsbelag beim Bremsen Zugkräfte und/oder Druckkräfte auf die Bolzen ausübt.

Bremsen dieser Art sind allgemein bekannt. Üblicherweise wird der Bremsbelag, bestehend aus Tragplatte und Reibbelag, mittels am Bremsträger befestigter Bolzen axial in Bezug auf die Bremsscheibe geführt. "Axial" bei Scheibenbremsen bedeutet im Allgemeinen: in einer Richtung parallel zur Drehachse der Bremsscheibe. "Radial" bedeutet entsprechend eine Richtung senkrecht zu einer axialen Richtung im vorstehenden Sinne.

Den Stand der Technik derartiger Scheibenbremsen repräsentieren z.B. die folgenden Patentdokumente: DE 1 238 284, DE 1 505 491, DE 1 575 920, DE 2 804 808, DE 2 845 404, DE 196 52 936, DE 41 15 064, DE 4 416 815 and US 5 860 496. Die gattungsbildende DE 2 931 216 offenbart eine Scheibenbremse gemäßdem Oberbegriff desAnspruchs 1 und einen Bremsbelag gemäß dem Oberbegriff des Anspruchs 16.

Eine andauernde technische Aufgabenstellung beim Entwurf von Scheibenbremsen ist die Reduzierung des Herstellungsaufwandes und des Gewichts der Bremse bei gleichzeitiger hoher Funktionszuverlässigkeit und geringem Wartungsaufwand. Die beiden letztgenannten Zielvorgaben beinhalten insbesondere auch die Vermeidung von durch Rost bedingten Störanfälligkeiten der Bremse. Ein besonderes Problem bei allen Bremskonstruktionen ist die Vermeidung von Quietschgeräuschen durch Schwingungen.

Diesen technischen Zielsetzungen widmet sich auch die vorliegende Erfindung.

Die erfindungsgemäße Scheibenbremse weist in an sich bekannter Weise einen Bremsträger auf, der am Fahrzeugrahmen befestigbar und mit Bolzen versehen ist, zur Führung zumindest eines Bremsbelages axial in Bezug auf eine Bremsscheibe, wobei der Bremsbelag Aufnahmen für die Bolzen aufweist, in welche die Bolzen eingreifen, wobei der Bremsbelag beim Bremsen Zugkräfte und/oder Druckkräfte in den Bolzen an inneren Flächen der Aufnahmen ausübt. Die oben angesprochenen technischen Ziele werden nach der Erfindung mit den Merkmalen des Anspruchs 1 erreicht.

Bevorzugte Ausgestaltungen der Scheibenbremse sind in den abhängigen Ansprüchen beschrieben.

Insbesondere sieht eine bevorzugte Ausgestaltung der Scheibenbremse vor, dass die relativen Abmessungen und Anordnungen der Bolzen und des Bremsbelages so sind, dass bei Einleitung einer Bremskraft, die das Fahrzeug bis zu einem Wert von etwa 0,1 g abzubremsen vermag, nur Zugkräfte auf den Bremsbelag wirken, die von dem einlaufenden Bolzen aufgenommen werden. Wenn eine Bremskraft oberhalb einer Verzögerung von 0,1 g eingeleitet wird, wirken auch Druckkräfte auf den Bremsbelag, die dann von dem auslaufenden Bolzen aufgenommen werden.

Eine bevorzugte Ausgestaltung der Scheibenbremse sieht vor, dass die Aufnahmen U-förmige Ausnehmungen sind. Die Bremsbeläge umgreifen mit den U-förmigen Ausnehmungen die zugeordneten Bolzen und werden auf diesen, axial in Bezug auf die Bremsscheibe bewegbar geführt.

Gemäß der Erfindung ist es vorgesehen, dass die Bremsbeläge in den U-förmigen Ausnehmungen nur eine Linienberührung mit den jeweils zugeordneten Bolzen der Bremsträger aufweisen. Die Abstützflächen der Bremsbeläge an den Haltebolzen sollen also bevorzugt so klein wie möglich sein, was durch den Begriff "Linienberührung" ausgedrückt sein soll.

Eine andere Ausführung der Erfindung sieht vor, dass die Bolzen, welche die Bremsbeläge abstützen, aus einem anderen Material als der Bremsträger gefertigt sind. Als Material für die Bolzen kommt insbesondere ein geringrostender Werkstoff in Betracht, wie z.B. die Werkstoffe mit der Bezeichnung 42CrMoS4V, Werkstoff Nr. 1.7227, oder 17 CrNiMo 6, Werkstoff Nr. 1.6587; die angegebenen Werkstoffnummern beziehen sich auf die DIN, Deutsche Industrie Norm. Die Bolzen zum Abstützen der Bremsbeläge können auch mit einem Korrosionsschutz beschichtet sein. Auch kann eine Beschichtung vorgesehen sein, um die Verschiebbarkeit der Bremsbeläge langfristig zu gewährleisten, auch unter chemisch aggressiven Bedingungen wie z.B. Streusalz oder dergleichen. Diese Bolzen können auch aus hochwertigem Schraubenstahl hergestellt werden, der korrosionsgeschützt ist.

Die Erfindung betrifft auch einen Bremsbelag zur Verwendung in einer Scheibenbremse mit den Merkmalen des Anspruchs 16.

Wie schon beschrieben führt die Anordnung der genannten Fläche und des entsprechenden Bolzens zum Ergebnis, dass die Kraft, die beim Bremsen zwischen der Fläche und dem Bolzen erzeugt wird, den Bremsbelag in Bezug auf den Bolzen in eine stabile Lage drückt. In diesem Zusammenhang hat diese Kraft eine annähernd radial einwärts gerichtete Komponente bezüglich der Scheibenachse.

Weitere bevorzugte Ausgestaltungen der Erfindung sind in den abhängigen Ansprüchen und in der nachfolgenden Beschreibung von Ausführungsbeispielen mitgeteilt.

In den nachfolgenden Figuren sind Ausführungsbeispiele dargestellt, wobei einander funktionsgleiche oder funktionsähnliche Bauteile mit denselben Bezugszeichen gekennzeichnet sind. Es zeigt:
- Figur 1: eine Scheibenbremse in Vorderansicht, im montierten Zustand von der fahrzeugäußeren Seite her gesehen;
- Figur 2: die Scheibenbremse gemäß der Figur 1 in Draufsicht;
- Figur 3: die Scheibenbremse gemäß den Figuren 1 und 2 in Seiten-ansicht;
- Figur 4: die Scheibenbremse gemäß der Figur 3 im Schnitt;
- Figur 5: den Bremsträger in Vorderansicht;
- Figur 6: den Bremsträger in Draufsicht;
- Figur 7: die Scheibenbremse gemäß den Figuren 1 bis 3 in Rückansicht, in mon- tiertem Zustand von der fahrzeuginneren Seite her gesehen;
- Figur 8: einen Bremsbelag zur Verwendung bei einer Scheibenbremse gemäß den Figuren 1 bis 7;
- Figur 9: Verlauf der Aktionskräfte auf der Einlaufseite des Bremsbelages;
- Figur 10: Verlauf der Aktionskräfte auf der Auslaufseite des Bremsbelages;
- Figur 11: Verlauf der Reaktionskräfte auf der Einlaufseite des Bremsbela ges; und
- Figur 12: Verlauf der Reaktionskräfte auf der Auslaufseite des Bremsbela- ges.

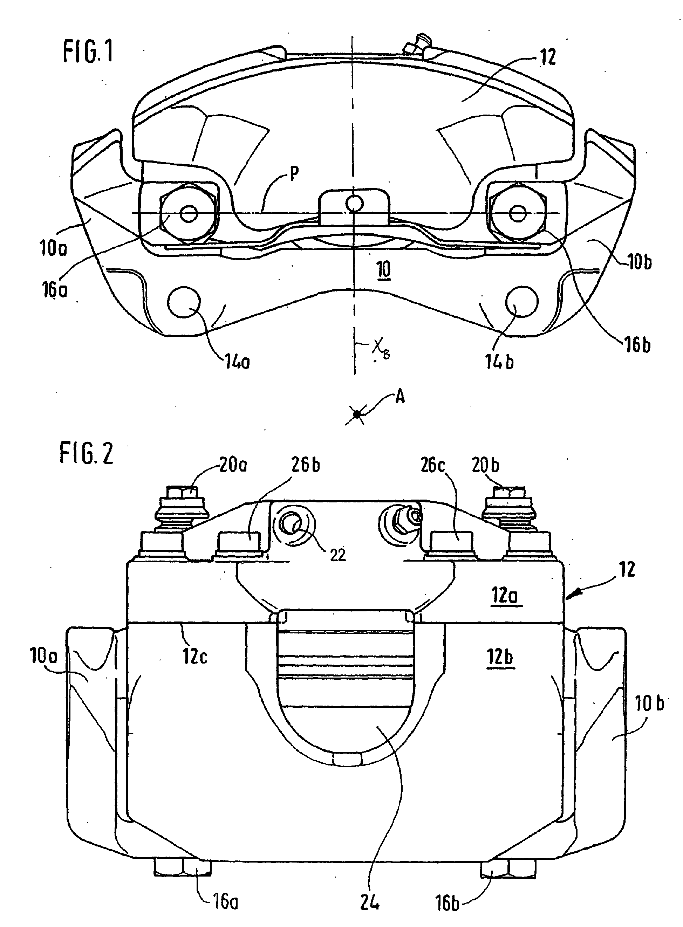

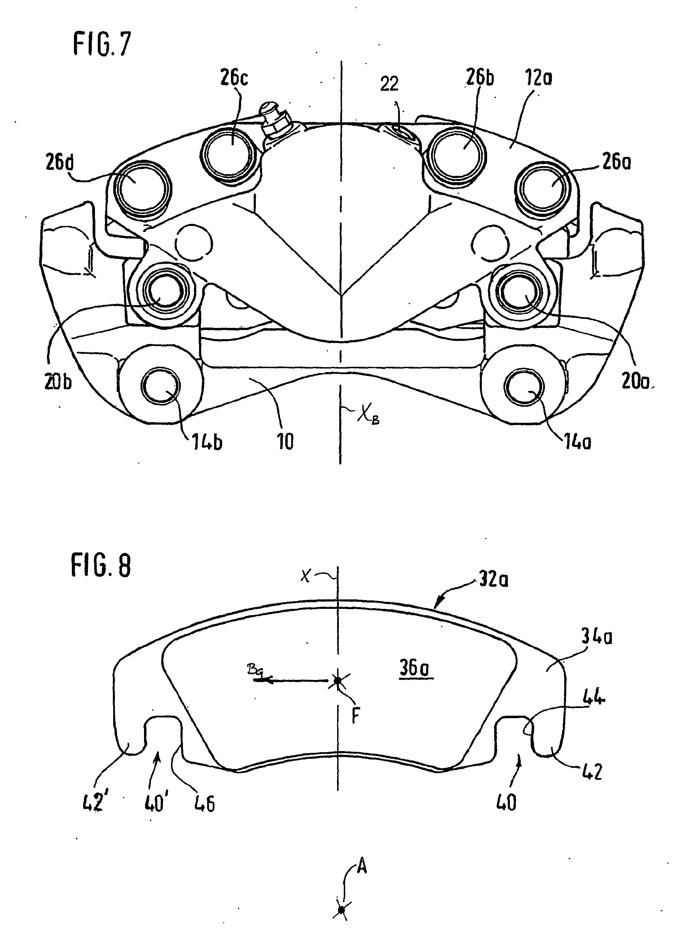

Wie insbesondere in den Figuren 1, 2, 5, 6 dargestellt ist, weist ein Bremsträger 10 zwei Arme 10a, 10b auf. Über dem Bremsträger 10 ist ein Schwimmsattel 12 angeordnet, der bei den dargestellten Ausführungsbeispielen zweiteilig ausgebildet ist. Der Schwimmsattel 12 weist einen fahrzeuginneren Abschnitt 12a und einen fahrzeugäußeren Abschnitt 12b auf. Die Abschnitte 12a, 12b sind fest miteinander verbunden durch Schrauben 26a, 26b, 26c, 26d (vgl. die Figuren 2 und 7). Der Bremsträger 10 ist in üblicher Weise fest am Fahrzeug befestigt, hierzu dienen Löcher 14a, 14b und Schrauben (nicht gezeigt).

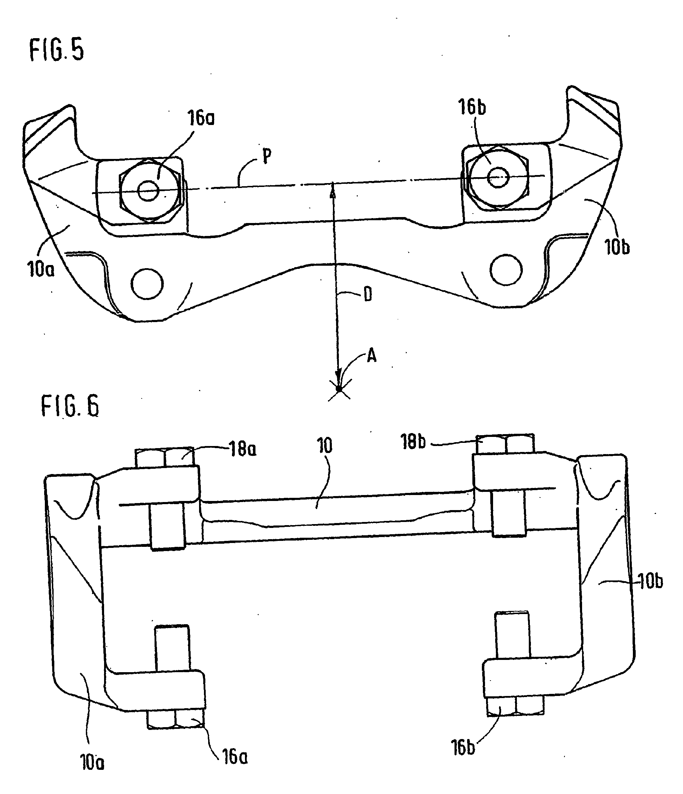

Wie insbesondere die Figur 6 und die Figuren 1, 3, 4, 5 zeigen, sind Bolzenschrauben 16a, 16b, 18a, 18b mit dem Bremsträger 10 fest verbunden. Die genannten Bolzenschrauben sind über einen Teil ihrer Längserstreckung mit Außengewinde versehen, welches in ein passendes Innengewinde im Bremsträger 10 eingeschraubt ist. Die in der Figur 6 freiliegenden Abschnitte der Bolzenschrauben (also diejenigen Abschnitte, die in der Figur 6 nicht durch den Bremsträger abgedeckt sind) sind gewindefrei. Diese gewindefreien Abschnitte der Bolzenschrauben 16a, 16b, 18a, 18b dienen, wie weiter unten näher beschrieben ist, zur Abstützung der Bremsbeläge. Die Bolzen der Bolzenschrauben, an denen die Bremsbeläge abgestützt sind, sind kreiszylinderförmig.

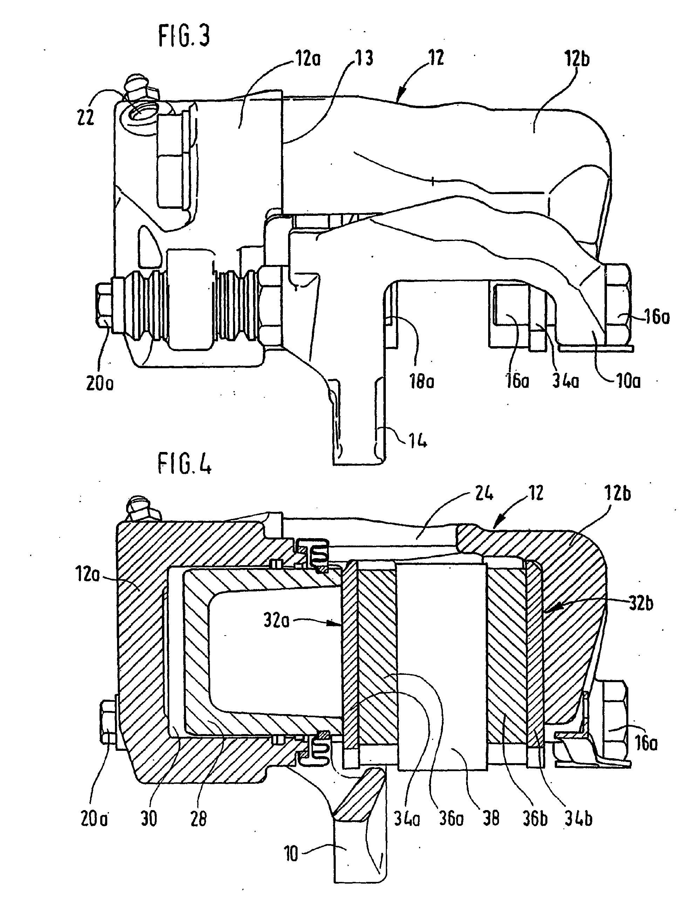

Wie insbesondere den Figuren 3, 4, 7 zu entnehmen ist, gleitet der Schwimmsattel 12 auf Führungshülsen, welche mittels der Schrauben 20a, 20b an den fahrzeuginnenseitig gelegenen Bolzenschrauben 18a, 18b koaxial befestigt sind. Hierzu sind die Bolzenschrauben 18a, 18b, zentrisch mit einem Innengewinde versehen, in welches ein Außengewinde der Schrauben 20a, 20b jeweils einschraubbar ist. Somit sind die Schraube 20a und die Bolzenschraube 18a sowie die Schraube 20b und die Bolzenschraube 18b jeweils zueinander koaxial (vgl. Figur 3). Ebenso verlaufen die Bolzenschrauben 16a, 18a und auch die Bolzenschrauben 16b, 18b (Figur 6) koaxial.

Gemäß den Figuren 2 und 7 sind die beiden Sattelabschnitte 12a, 12b mittels Schrauben 26a, 26b, 26c, 26d fest miteinander verbunden. Die Anlagefläche der beiden Sattelabschnitte 12a, 12b ist in der Figur 2 mit 12c bezeichnet.

Über einen Flüssigkeitseinlass 22 wird in üblicher Weise Bremsflüssigkeit zum Bewegen des Kolbens 28 in einen Betätigungszylinder 30 eingeleitet (vgl. Figur 4). Wird also in dem Betätigungszylinder 30 der Flüssigkeitsdruck erhöht, bewegt sich der Kolben 28 in der Figur 4 nach rechts und der Schwimmsattel 12 entsprechend nach links.

Die Figur 8 zeigt einen (32a) der beiden baugleichen Bremsbeläge 32a, 32b (vgl. auch Figur 4). Der Bremsbelag 32a besteht aus einer Tragplatte 34a (aus Metall) und einem Reibbelag 36a. Der Reibbelag 36a verschleißt durch Reibung beim Bremsen. Die Figur 8 zeigt auch den Flächenschwerpunkt F des Reibbelages 32a. Der Bremsbelag weist auf der Einlaufseite und auf der Auslaufseite der Bremse jeweils eine U-förmige Ausnehmung 40, 40' auf. Auch zeigt die Figur 8 schematisch die Drehachse A der Bremsscheibe 38 (letztere in Figur 8 nicht gezeigt, vgl. Figur 4).

Die Bremsbeläge 32a, 32b werden mit ihren U-förmigen Ausnehmungen 40, 40' von oben auf die gewindefreien Abschnitte der Bolzenschrauben 16a, 16b bzw. 18a, 18b aufgesetzt. Dabei kommt es zu einer Linienberührung zwischen einer Wandung in den Ausnehmungen 40, 40' und der Oberfläche der jeweiligen Bolzenschraube 16a, 16b, 18a, 18b.

Die Ebene, welche durch die Längsachsen der Bolzenschrauben 16a, 16b, 18a, 18b aufgespannt wird, ist in den Figuren 1 und 5 mit P bezeichnet. Eingezeichnet ist in der Figur 5 schematisch auch die Position der Achse A der Bremsscheibe. Diese Achse A steht senkrecht zur Zeichnungsebene, vgl. auch die Figur 8.

Weiterhin sind die genannten Abmessungen der Bremsenbauteile so gewählt, dass bei Einleitung einer Bremskraft, die das Fahrzeug bis etwa 0,1 g abzubremsen vermag, nur Zugkräfte auf die Bremsbeläge wirken. Wenn in der Figur 8 sich die Bremsscheibe gegen den Uhrzeigersinn um die Achse A dreht, dann ist die Einlaufseite der Bremse rechts, also entsprechend der Ausnehmung 40, während die Auslaufseite der Bremse links liegt, entsprechend der Ausnehmung 40'. Bei Bremskräften, die unter gutem Reibeingriff zwischen Radreifen und Fahrbahn die genannte maximale Fahrzeug-Verzögerung von etwa 0,1 g nicht überschreiten, treten deshalb nur Zugkräfte am Bremsbelag 32a auf, d.h. auf der Einlaufseite, Figur 8, rechts werden die Bremskräfte von der einlaufseitigen Fläche 44 der Nase 42 des Bremsbelages aufgenommen. Die bremsenden Reibkräfte wirken in der Figur 8 nach links und sind als die durch den Flächenschwerpunkt F gesamte wirkende Bremskraft B_{G} bezeichnet. Erst wenn eine Bremskraft B_{G} oberhalb einer Verzögerung von 0,1 g eingeleitet wird, schlägt die Fläche 46 des Bremsbelages gegen den zugeordneten Bolzen in der Ausnehmung 40' auf der Auslaufseite der Bremse. Dann wirken die Reaktionskräfte der Bremskraft B_{G} als Zugkraft an der Fläche 44 und als Druckkraft an der Fläche 46.

Die Abmessungen der Bremse können auch so gewählt sein, dass die Bremsbeläge 32a, 32b bei Übertragung einer Bremskraft, die aus einem hydraulischen Bremsdruck von bis zu etwa 10 bar resultiert und einer Fahrzeugverzögerung von bis zu etwa 1 m/s² entspricht, stets nur die beschriebenen Zugkräfte am Bremsbelag wirken, während bei hydraulischen Bremsdrücken von mehr als 30 bar, entsprechend einer Fahrzeugverzögerung von mehr als 3 m/s², stets sowohl Zugkräfte als auch erhebliche Druckkräfte (wie oben beschrieben) von den Bolzen auf die Bremsbeläge wirken. Im Übergangsbereich zwischen 10 und 30 bar findet eine langsam steigende Kraftverteilung auf beide Bolzen statt. Hierdurch kann der Bremsträger leicht (mit geringem Gewicht) gebaut werden. Hohe Umfangskräfte werden auf beide Trägerarme günstig verteilt.

Die vorstehend genannten Kraftübertragungen durch Zug bzw. Druck werden bevorzugt für den fahrzeugäußeren Bremsbelag gewählt. Für den auf der inneren Fahrzeugseite angeordneten Bremsbelag können die Abmessungen ebenso gewählt werden, obgleich dieser bevorzugt überwiegend gezogen wird.

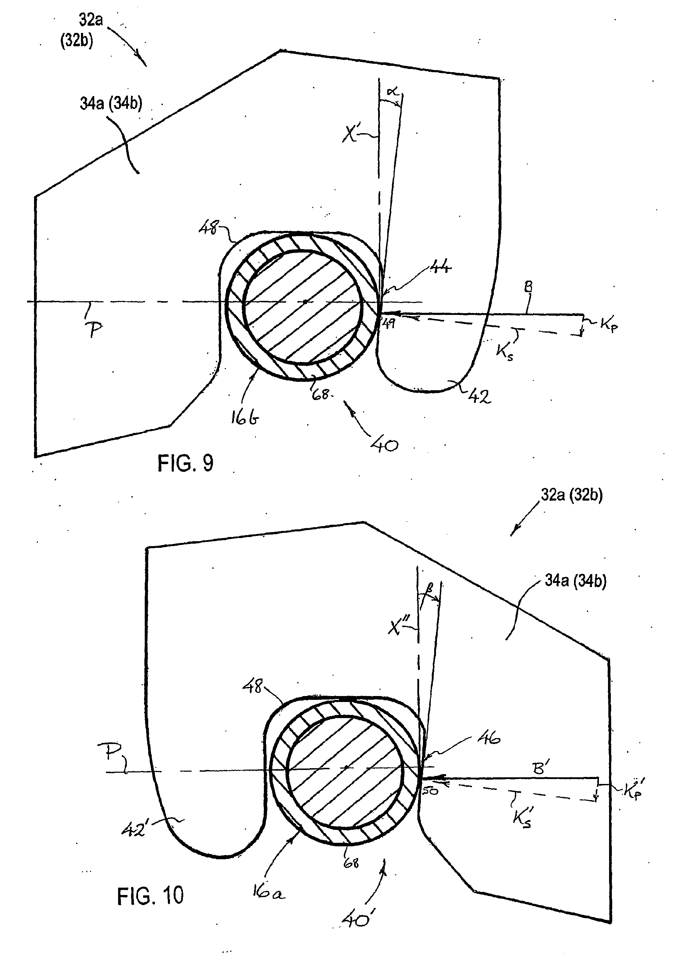

Die Figuren 9, 10, 11 und 12 zeigen Details der vorstehend genannten Kraftübertragungen durch Zug bzw. Druck innerhalb der Ausnehmungen 40, 40' des fahrzeugäußeren Bremsbelages 32a beim Bremsen.

Die Figur 9 zeigt die auf der Einlaufseite der Bremse angeordnete Ausnehmung 40, deren innere Fläche 44 an den Bolzen 16b bei einer Bremsbetätigung anschlägt. Die Bremskraft B, die auf den Bolzen 16b übertragen wird, ist bei kleineren Bremsungen die Bremskraft Bg als solche, bei größeren Bremsungen ein Teil der gesamten Bremskraft B_{G}.

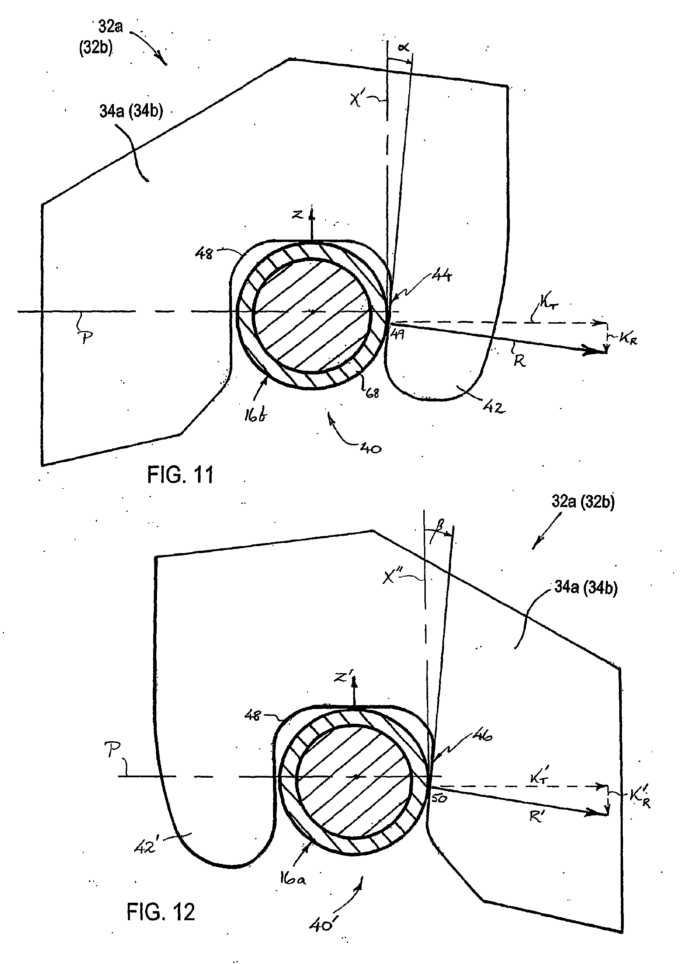

In den Figuren 8 bis 12 ist angenommen, dass die Scheibenbremse sich gegen den Uhrzeigersinn dreht. Der Bremsbelag 32a erfährt also eine Kraft, die in den Figuren nach links weist. Dies betrifft eine Bremsung bei Vorwärtsfahrt des Fahrzeuges. Bei Rückwärtsfahrt sind die Kraftvektoren umgekehrt gerichtet. Die innere Fläche 44 gemäß Figur 9, an der bei einer Bremsung während einer Vorwärtsfahrt die Bremskräfte als Zugkräfte aufgenommen werden, ist im Wesentlichen eben und berührt den zylindrischen Bolzen 16b auf eine Linie. Diese Linie ist in den Figuren 9 und 11 mit 49 bezeichnet.

Die Figur 8 zeigt eine Symmetrieebene X, die in Bezug auf die Bremsbeläge 32a, 32b eine zentrale Ebene darstellt. Diese zentrale Ebene X des Bremsbelages 32a entspricht sowohl der Symmetrieebene X_{B} der Scheibebremse (vgl. Figuren 1 und 7). An dieser Ebene X des Bremsbelages 32a spiegeln sich die Einlaufseite und die Auslaufseite der Bremse. Auf dieser Symmetrieebene X liegen sowohl die Achse A der Bremsscheibe als auch der Flächenschwerpunkt F des Bremsbelages.

Die Figuren 9 bis 12 zeigen die Ebenen X' und X", die sich parallel zur genannten zentralen Symmetrieebene X gemäß Figur 8 erstrecken.

Wie der Figur 9 zu entnehmen ist, bildet die innere Fläche 44 in der Ausnehmung 40 einen spitzen Winkel α mit der Ebene X' und entsprechend auch mit der zur Ebene X' parallelen zentralen Ebene X. Der Winkel α kann zwischen 0,5° und 10° liegen, bevorzugt liegt er zwischen 2° und 8° und besonders bevorzugt zwischen 3° und 6°. Beim Ausführungsbeispiel beträgt der Winkel α etwa 4°.

Die Berührungslinie 49 zwischen dem Bolzen 16b und der Nase 42 am Bremsbelag 32a verläuft, wie in der Figur 9 dargestellt, radial einwärts in Bezug auf die Ebene P, die von den Mittelachsen der Bolzen aufgespannt wird.

Die Figur 9 zeigt die Bremskraft B, die auf den Bolzen 16b übertragen wird. Die Bremskraft B lässt sich in einem Kräfteparallelogramm in eine Komponente K_{S}, die senkrecht auf der Fläche 44 steht und in eine Komponente K_{P}, die parallel zu der Fläche 44 verläuft, aufteilen. Die auf der Fläche 44 senkrecht stehende Kraftkomponente K_{S} bewirkt keine Relativverschiebung zwischen dem Bremsbelag 32a und dem Bolzen 16b. Wohl aber bewirkt die zu der Fläche 44 parallel verlaufende Kraftkomponente K_{P} eine Relativkraft zwischen Bremsbelag 32a und Bolzen 16b, die bewirkt, dass der Bremsbelag 32a beim dargestellten Ausführungsbeispiel gemäß Figur 9 nach unten, annähernd radial einwärts, in eine stabile Lage gedrückt wird. Der Bremsbelag 32a wird mit seiner Ausnehmung 40 auf den Bolzen 16b gedrückt. Es wird eine stabile Positionierung des Bremsbelages 32a in Bezug auf den Bolzen 16b erreicht.

Die Figur 11 zeigt die Reaktionskräfte in der U-förmigen Ausnehmung 40, wobei eine stabile Positionierung des Bremsbelages 32a in Bezug auf den Bolzen 16b erreicht wird.

Die Figur 11 zeigt die auf der Einlaufseite der Bremse angeordnete Ausnehmung 40 (vgl. Figur 9), an deren innerer Fläche 44 im Zusammenwirken mit dem Bolzen 16b die Reaktionskraft R erzeugt wird. Die Reaktionskraft R ist die Kraft, die zwischen dem Bolzen 16b und der Fläche 44 während einer Bremsung entsteht und sich senkrecht zur Fläche 44 erstreckt. Die Reaktionskraft R, die an der Berührungslinie 49 zwischen Bolzen und Bremsbelag wirkt, lässt sich in einem Kräfteparallelogramm in eine Komponente K_{T}, die senkrecht auf der Ebene X' steht und in eine Komponente K_{R}, die sich radial einwärts parallel zur zentralen Ebene X (bzw. zur dazu parallelen Ebene X') gerichtet ist, aufteilen.

Die auf der Ebene X' senkrecht stehende Kraft K_{T} ist entgegengesetzt der Richtung des Vektors B von Figur 9 und ist eine Zugkraft, die der Bolzen 16b auf den Bremsbelag 32a ausübt. Die Kraftkomponente K_{R} zwischen Bremsbelag 32a und Bolzen 16b bewirkt, dass der Bremsbelag 32a beim dargestellten Ausführungsbeispiel gemäß der Figur 11 nach unten, radial einwärts in eine stabile Lage gedrückt und gehalten wird. Der Bremsbelag 32a kann nicht aus seiner Halterung am Bolzen 16b entkommen und auch keine unerwünschten Schwingungsbewegungen ausführen. Es wird eine stabile Positionierung des Bremsbelages 32a in Bezug auf den Bolzen 16b erreicht, und zwar auch dann, wenn der Flächenschwerpunkt F des Reibbelages radial über, außerhalb der Ebene P, die die Mittelachsen der Bolzen 16a, 16b, 18a, 18b enthält, liegt. In dieser stabilen Positionierung des Bremsbelages 32a trifft der Boden der Ausnehmung 40 die Oberfläche des Bolzens 16b und dort wird eine Reaktionskraft Z, die sich parallel der Ebene X' erstreckt, erzeugt.

In ähnlicher Weise zeigen die Figuren 10 und 12 die Kraftübertragung zwischen dem Bremsbelag 32a und dem Bolzen 16a auf der Auslaufseite der Bremse, bei Bremsung in Vorwärtsfahrtrichtung. Einander entsprechende Bauteile sind mit gleichen Bezugszeichen, jeweils um einen Strich ergänzt, gekennzeichnet. Wirken höhere Bremskräfte, zum Beispiel eine Bremskraft B_{G}, die eine Verzögerung von 0,1g bewirkt, dann wird eine Bremskraft B' auf den Bolzen 16a ausgeübt, und es werden auf der Auslaufseite Druckkräfte gemäß der Figur 12 eingeleitet.

Die Figur 10 zeigt die auf der Auslaufseite der Bremse angeordnete Ausnehmung 40', deren innere Fläche 46 an den Bolzen 16a bei einer höheren Bremsbetätigung anschlägt. Die Bremskraft B', die auf den Bolzen 16a übertragen wird, ist ein Teil der gesamten Bremskraft B_{G}. Die Berührungslinie 50 zwischen der Fläche 46 in der Ausnehmung 40' des Bremsbelages 32a (vgl. auch Figur 8) ist analog der Fläche 44 um einen Winkel β gegen eine Ebene X" geneigt, wobei die Ebene X" parallel zur zentralen Ebene X verläuft.

Die Bremskraft B' lässt sich auch in einem Kräfteparallelogramm in eine Komponente K'_{S}, die senkrecht auf der Fläche 46 steht, und in eine Komponente K'_{P}, die parallel zu der Fläche 46 verläuft, aufteilen (vgl. Figur 9). Die auf der Fläche 46 senkrecht stehende Kraftkomponente K'_{S} bewirkt keine Relativbewegung zwischen Bremsbelag 32a und Bolzen 16a. Wohl aber bewirkt die zu der Fläche 46 parallel verlaufende Kraftkomponente K'_{P} eine Relativkraft zwischen Bremsbelag 32a und Bolzen 16a. Diese bewirkt, dass der Bremsbelag 32a beim dargestellten Ausführungsbeispiel gemäß Figur 10 nach unten, annähernd radial einwärts in eine stabile Lage gedrückt wird. Der Bremsbelag 32a wird mit seiner Ausnehmung 40' auf den Bolzen 16a gedrückt. Es wird eine stabile Positionierung des Bremsbelages 32a in Bezug auf den Bolzen 16a erreicht.

Die Figur 12 zeigt die Reaktionskräfte in der U-förmigen Ausnehmung 40', wobei eine stabile Positionierung des Bremsbelages 32a in Bezug auf den Bolzen 16a erreicht wird.

Die Figur 12 zeigt die auf der Auslaufseite der Bremse angeordnete Ausnehmung 40' (vgl. Figur 10), von deren innerer Fläche 46 im Zusammenwirken mit dem Bolzen 16a von diesem die Reaktionskraft R' erzeugt wird. Die Reaktionskraft R' ist die Kraft, die zwischen dem Bolzen 16a und der Fläche 46 während einer Bremsung entsteht und sich senkrecht zur Fläche 44 erstreckt. Die Reaktionskraft R', die an der Berührungslinie 50 zwischen dem Bolzen 16a und dem Bremsbelag 32a wirkt lässt sich in einem Kräfteparallelogramm in eine Kraft K_{T}', die senkrecht zur Ebene X steht, und in eine Kraft K_{R}', die parallel zur Ebene X" bzw. zur zentrale Ebene X verläuft, aufteilen. Die Druckkraft, die der Bolzen 16a auf den Bremsbelag 32a ausübt, ist die Kraftkomponente K_{T}'; sie erstreckt sich parallel zur Ebene P und steht in der entgegengesetzten Richtung zum Kraftvektor B'gemäß der Figur 10.

Die Kraftkomponente K_{R}' hält den Bremsbelag 32a auf dem Bolzen 16a in einer stabilen Position. Die Kraft zur Stabilisierung ist also wieder im Wesentlichen radial gerichtet, sie erzeugt eine radiale Komponente in Bezug auf die Scheibenachse A. Der Winkel β hat die gleichen bevorzugten Abmessungen wie der oben erläuterte Winkel α. In dieser stabilen Position des Bremsbelages 32a trifft der Boden der Ausnehmung 40' die Oberfläche des Bolzens 16a und bewirkt die Reaktionskraft Z', die sich parallel zu der Ebene X" erstreckt.

Die U-förmigen Ausnehmungen 40, 40' weisen entsprechend der Figur 8 an ihren Böden abgerundete Übergänge zwischen den Seitenflächen auf, wobei die Übergangsradien (vgl. Bezugszeichen 48 in den Figuren 9 bis 12) kleiner sind als die Radien der abstützenden Bolzen 16a, 16b, 18a, 18b. Damit ist es möglich, die Berührungslinien zwischen dem Bremsbelag 32a und dem Bolzen 16a genauer zu definieren. Die schmalen, vorzugsweise linienförmigen Berührungsflächen der Bolzen in den U-förmigen Ausnehmungen 40, 40' ermöglichen, dass eventuelle Korrosionsprodukte aufgrund der hohen Flächenpressung entfernt werden. Schwingungen werden weitestgehend vermieden.

Bei den Ausführungsbeispielen gemäß den Figuren sind die Bolzenschrauben 16a, 16b, 18a, 18b, auf denen die Bremsbeläge 32a, 32b abgestützt sind, im Abstützbereich jeweils zylinderförmig. Wie den Figuren 9 bis 12 zu entnehmen ist, können die Bolzen 16a, 16b, 18a, 18b mit einer Hülse 68 versehen werden, z.B. einer federnden (elastischen) Hülse, was ebenfalls eine erhöhte Dämpfung von Schwingungen bewirken kann. Die Hülse 68 kann korrosionshemmende und/oder dämpfende Eigenschaften zwischen dem Bremsbelag und dem Bolzen aufweisen.

In Abwandlung der vorstehend als Ausführungsbeispiele beschriebenen Schwimmsattelbremsen kann die Erfindung auch mit einer Festsattelbremse verwirklicht werden. Insoweit entsprechen der Bremsträger und die Bolzen sowie die zugeordneten Merkmale der Bremsbeläge denen der Schwimmsattelbremse. Beim Festsattel erfolgt nur eine andere Krafteinleitung in die Bremsbeläge. Bei diesen Ausführungsformen der Erfindung ist ein besonderer Vorteil darin zu sehen, dass aufgrund der gezogenen Bremsbeläge bei einer 4-Kolben-Bremse alle Kolbendurchmesser die gleiche Größe aufweisen können. Es ist nicht erforderlich, auf der Auslaufseite größere Kolbendurchmesser vorzusehen.

### Bezugszeichenliste

- 10: Bremsträger
- 10a, 10b: Bremsträgerarm
- 12: Schwimmsattel
- 12a, 12b: Schwimmsattelabschnitte
- 12c: Anlagefläche der Schwimmsattelabschnitte
- 14a, 14b: Löcher
- 16a, 16b: Bolzenschrauben zur Führung eines Bremsbelages
- 18a, 18b: Bolzenschrauben zur Führung eines Bremsbelages
- 20a, 20b: Schrauben
- 22: Flüssigkeitseinlass
- 26a, 26b, 26c, 26d: Schrauben
- 28: Kolben
- 30: Betätigungszylinder
- 32a, 32b: Bremsbeläge
- 34a, 34b: Tragplatten der Bremsbeläge
- 36a, 36b: Reibbeläge der Bremsbeläge
- 40, 40': U-förmige Ausnehmungen
- 42, 42': Nasen des Bremsbelages
- 44, 46: Innere Kontaktflächen der Ausnehmungen
- 48: Übergangsradien der Ausnehmungen
- 49, 50: Berührungslinien
- 68: Bolzenhülse
- A: Scheibenachse oder Drehachse
- P: Ebene durch die Längsachsen der Bolzen
- B_{G}: Gesamte Bremskraft
- B, B': Bremskräfte an den Bolzen
- K_{S}, K_{S}': Komponenten der Bremskräfte senkrecht zur Kontaktfläche
- K_{P}, K_{P}': Komponenten der Bremskräfte parallel zur Kontaktfläche
- R, R': Reaktionskräfte der Bolzen an den Kontaktflächen
- K_{T},K_{T}': Komponenten der Reaktionskräfte tangential zur Drehachse
- K_{R}, K_{R}': Komponenten der Reaktionskräfte radial zur Drehachse
- X_{B}: Zentrale Ebene der Scheibenbremse
- X: Zentrale Ebene des Bremsbelages
- X',X": Ebenen, die sich parallel zur zentralen Ebene X erstrecken
- Z, Z': Reaktionskräfte der Bolzen an den Boden der Ausnehmungen

## Patentansprüche

1. Scheibenbremse mit einem am Fahrzeug befestigbaren Bremsträger, der mit Bolzen (16a, 16b, 18a, 18b) versehen ist, zur Führung zumindest eines Bremsbelages (32a, 32b) axial in Bezug auf eine Bremsscheibe (38), wobei der Bremsbelag (32a, 32b) Aufnahmen (40, 40') für die Bolzen (16a, 16b, 18a, 18b) aufweist, in welche die Bolzen (16a, 16b, 18a, 18b) eingreifen, und der Bremsbelag (32a, 32b) beim Bremsen Zugkräfte und/oder Druckkräfte über die inneren Flächen (44, 46) der Aufnahmen (40, 40') auf die Bolzen (16a, 16b, 18a, 18b) ausübt, **dadurch gekennzeichnet, dass** eine innere Fläche (44, 46) in zumindest einer der Aufnahmen (40, 40'), welche an den Bolzen bei einer Bremsbetätigung anschlägt und die Bolzen (16a, 16b, 18a, 18b) auf einer Linie berührt, so in Bezug auf eine zentrale Ebene (X_{B}) der Bremse geneigt ist, dass eine Komponente (K_{P}, K_{P}'; K_{R}, K_{R}') der an der genannten Fläche (44, 46) wirkenden Kraft (B, B'; R, R') den Bremsbelag (32a, 32b) in Bezug auf den Bolzen (16a, 16b) in eine stabile Lage drückt.

2. Scheibenbremse nach Anspruch 1, **dadurch gekennzeichnet, dass** der Winkel (α, β) zwischen der inneren Fläche (44, 46) der Aufnahme (40, 40') und der zentrale Ebene (X_{B}) der Scheibenbremse an einer Bolzenabstützlinie (49, 50) zwischen 1° und 10°, bevorzugt zwischen 2° und 8°, und weiter bevorzugt zwischen 3° und 6° liegt.

3. Scheibenbremse nach einem der vorhergehenden Ansprüche, **dadurch gekennzeichnet, dass** die zentrale Ebene (X_{B}) der Scheibenbremse auch die zentrale Ebene (X) des Bremsbelages (32a, 32b) ist.

4. Scheibenbremse nach einem der vorhergehenden Ansprüche, **dadurch gekennzeichnet, dass** die genannte innere Fläche (44, 46) im Wesentlichen eben ist.

5. Scheibenbremse nach einem der vorhergehenden Ansprüche, **dadurch gekennzeichnet, dass** ein Bolzenabstützlinie (49, 50) an der genannten inneren Fläche radial einwärts einer Ebene (P) liegt, die von den Mittelachsen der Bolzen (16a, 16b, 18a, 18b) aufgespannt ist.

6. Scheibenbremse nach einem der vorhergehenden Ansprüche, **dadurch gekennzeichnet, dass** der Bremsbelag (32a, 32b) mit den Aufnahmen (40, 40') auf die Bolzen (16a, 16b, 18a, 18b) radial aufschiebbar ist.

7. Scheibenbremse nach einem der vorhergehenden Ansprüche, **dadurch gekennzeichnet, dass** die Aufnahmen (40, 40') Linienberührung mit dem jeweils zugeordnetem Bolzen (16a, 16b, 18a, 18b) haben.

8. Scheibenbremse nach einem der vorhergehenden Ansprüche, **dadurch gekennzeichnet, dass** die Bolzen (16a, 16b, 18a, 18b) und die zugeordneten Aufnahmen (40, 40') auf der Einlaufseite und auf der Auslaufseite der Bremse angeordnet sind, und dass zumindest die Aufnahmen (40) auf der Einlaufseite der Bremse so geformt sind, dass die genannte Komponente (K_{P}; K_{R}) der Kraft (B; R) dort erzeugt wird.

9. Scheibenbremse nach einem der vorhergehenden Ansprüche, **dadurch gekennzeichnet, dass** der einlaufseitige Bolzen (16b, 18b) und die Aufnahmen (40') so in Bezug zueinander angeordnet sind, dass bei einer Bremsung in Vorwärtsfahrtrichtung des Fahrzeuges Zugkräfte des Bremsbelages (32a, 32b) von den genannten inneren Flächen (44) auf den Bolzen (16b, 18b) wirken.

10. Scheibenbremse nach einem der vorhergehenden Ansprüche, **dadurch gekennzeichnet, dass** die Aufnahmen (40, 40') U-förmig sind.

11. Schreibenbremse nach einem der vorhergehenden Ansprüche, **dadurch gekennzeichnet, dass** die relativen Abmessungen und Anordnungen der Bolzen (16a, 16b, 18a, 18b) und des Bremsbelages (32a, 32b) so bemessen sind, dass bei Einleitung einer Bremskraft (B_{G}), die das Fahrzeug bis zu einem Wert von etwa 0,1 g abzubremsen vermag, nur Zugkräfte auf den Bremsbelag (32a, 32b) wirken.

12. Scheibenbremse nach einem der vorhergehenden Ansprüche, **dadurch gekennzeichnet, dass** die Aufnahme (40'), von deren innerer Fläche (46) Druckkräfte abgeleitet werden, so gestaltet ist, dass die Reaktionskraft (R') eine Komponente (K_{R}') erzeugt.

13. Scheibenbremse nach Anspruch 12 **dadurch gekennzeichnet, dass** bei einer Bremskraft (B_{G}), die eine Verzögerung von mehr als 0,1 g erzeugt, Druckkräfte von den Bremsbelag (32a, 32b) auf den auslaufseitigen Bolzen (16a, 18a) wirken.

14. Scheibenbremse nach einem der vorhergehenden Ansprüche, **dadurch gekennzeichnet, dass** die Bolzen (16a, 16b, 18a, 18b) aus einem anderen Material als der Bremsträger (10) bestehen, insbesondere aus nichtrostendem Stahl, oder dass die Bolzen mit einer Beschichtung aus nichtrostendem Material versehen sind.

15. Scheibenbremse nach einem der vorhergehenden Ansprüche, **dadurch gekennzeichnet, dass** diese eine Schwimmsattelbremse, eine Schwimmrahmenbremse oder eine Festsattelbremse ist.

16. Bremsbelag (32a, 32b) zur Verwendung in einer Scheibenbremse, die den Bremsbelag (32a, 32b) auf zwei Bolzen (16a, 16b, 18a, 18b) abstützt, wobei der Bremsbelag Aufnahmen (40, 40') für diese Bolzen (16a, 16b, 18a, 18b) aufweist, in welche die Bolzen (16a, 16b, 18a, 18b) eingreifen und von deren inneren Flächen (44, 46) Zugkräfte und/oder Druckkräfte beim Bremsen ausgeübt werden, **dadurch gekennzeichnet, dass** eine innere Fläche (44, 46) zumindest einer der Aufnahmen (40, 40'), die an den Bolzen (16a, 16b, 18a, 18b) bei einer Bremsbetätigung anschlägt, den Bolzen (16a, 16b, 18a, 18b) auf einer Linie berührt und so in Bezug auf eine zentrale Ebene (X_{B}) der Bremse geneigt ist, dass eine Komponente (K_{P}, K_{P}'; K_{R}, K_{R}') der an der genannten Fläche (44, 46) wirkenden Kraft (B, B'; R, R') den Bremsbelag (32a, 32b) in Bezug auf den Bolzen (16a, 16b) in eine stabile Lage drückt.

17. Bremsbelag (32a, 32b) nach Anspruch 16, **dadurch gekennzeichnet, dass** die innere Fläche (44, 46) bei einer Bremsbetätigung in einem Winkel (α, β) in Bezug auf eine zentrale Ebene (X) des Bremsbelages (32a, 32b) verläuft, wobei die genannte innere Fläche (44, 46) in der Aufnahme (40, 40') einen spitzen Winkel (α, β) mit der genannten Ebene (X) bildet.

18. Bremsbelag nach Anspruch 17 **dadurch gekennzeichnet, dass** der Winkel (α,β) zwischen 0,5° und 10° liegt, bevorzugt zwischen 2° und 8° und besonders bevorzugt zwischen 3° und 6°.

19. Bremsbelag nach einem der Ansprüche 16 bis 18,
**dadurch gekennzeichnet, dass**
die innere Fläche (44, 46) im wesentlichen eben ist.

## Claims

1. Disc brake having a brake carrier (10) which is fastenable to a vehicle frame and provided with studs (16a, 16b, 18a, 18b) for guiding at least one brake lining (32a, 32b) axially with respect to a brake disc, wherein the brake lining (32a, 32b) includes mountings (40, 40') for the studs (16a, 16b, 18a, 18b) into which the studs (16a, 16b, 18a, 18b) engage, and during braking the brake lining (32a, 32b) exerts tensile forces and/or compressive forces upon the studs (16a, 16b, 18a, 18b) via inner surfaces (44, 46) of the mountings (40, 40'), **characterised in that** an inner surface (44, 46) of at least one of the mountings (40, 40'), which surface (44, 46) bears against a respective stud (16a, 16b, 18a, 18b) during a brake actuation so as to define a line of contact (49, 50) with the respective stud (16a, 16b, 18a, 18b), is inclined with respect to a central plane (X_{B}) of the brake such that a component (K_{P}, K_{P}', K_{R}, K_{R}') of the force (B, B', R, R') acting at said surface (44, 46) biases the brake lining (32a, 32b) into a stable position with respect to the stud (16a, 16b, 18a, 18b).

2. Disc brake according to claim 1, **characterized in that** the angle (α, β) formed between the inner surface (44, 46) of the mounting (40, 40') and the central plane (X_{B}) of the brake at a stud line-of-contact (49, 50) is between 1° and 10°, preferably between 2° and 8°, and more preferably between 3° and 6°.

3. Disc brake according to one of the preceding claims, **characterized in that** the central plane (X_{B}) of the brake is also the central plane (X) of the brake lining (32a, 32b).

4. Disc brake according to one of the preceding claims, **characterized in that** said inner surface (44, 46) is essentially flat.

5. Disc brake according to one of the preceding claims, **characterized in that** a stud line-of-contact (49, 50) on said inner surface (44, 46) lies radially inwards of a plane (P) that passes through the central axes of the studs (16a, 16b, 18a, 18b).

6. Disc brake according to one of the preceding claims, **characterized in that** the brake lining (32a, 32b) including the mountings (40, 40') is radially insertable to the respective studs (16a, 16b, 18a, 18b).

7. Disc brake according to one of the preceding claims, **characterized in that** the mountings (40, 40') have line contact with each associated stud (16a, 16b, 18a, 18b).

8. Disc brake according to one of the preceding claims, **characterized in that** the studs (16a, 16b, 18a, 18b) and the associated mountings (40, 40') are arranged at the run-in side and at the run-out side of the brake, and that at least the mounting (40) at the run-in side of the brake is so formed that said component (K_{P}, K_{R}) of the force (B, R) is generated there.

9. Disc brake according to one of the preceding claims, **characterized in that** the run-in side stud (16b, 18b) and the mounting (40) are so arranged with respect to one another that, upon braking in the forward travel direction of the vehicle, tensile forces of the brake lining (32a, 32b) are applied from said inner surface (44) to the stud (16b, 18b).

10. Disc brake according to one of the preceding claims, **characterized in that** the mountings (40, 40') are U-shaped.

11. Disc brake according to one of the preceding claims, **characterized in that** the relative dimensions and configurations of the studs (16a, 16b, 18a, 18b) and of the brake lining (32a, 32b) are such that, upon introduction of a braking force (B_{G}) capable of decelerating the vehicle up to a value of about 0.1 g, only tensile forces act upon the brake lining (32a, 32b).

12. Disc brake according to one of the preceding claims, **characterized in that** the mounting (40'), from the inner surface (46) of which compressive forces are transferred, is so configured that the reaction force (R') generates a component (K_{R}').

13. Disc brake according to claim 12, **characterized in that**, with a braking force (B_{G}) that generates a deceleration of more than 0.1g, compressive forces from the brake lining (32a, 32b) act upon the run-out side stud (16a, 18a).

14. Disc brake according to one of the preceding claims, **characterized in that** the studs (16a, 16b, 18a, 18b) are made of a different material to the brake carrier (10), in particular of non-rusting steel, or that the studs are provided with a coating of rustproof material.

15. Disc brake according to one of the preceding claims, **characterized in that** the disc brake is a floating-caliper brake, a floating-frame brake, or a fixed-caliper brake.

16. Brake lining (32a, 32b) for use in a disc brake that supports the brake lining (32a, 32b) on two studs (16a, 16b, 18a, 18b), wherein the brake lining (32a, 32b) has mountings (40, 40') into which the studs (16a, 16b, 18a, 18b) engage and from inner surfaces (44, 46) of which tensile forces and compressive forces are exerted during braking, **characterised in that** an inner surface (44, 46) of at least one of the mountings (40, 40'), which surface (44, 46) bears against a respective stud (16a, 16b, 18a, 18b) during a brake actuation so as to define a line of contact (49, 50) with the respective stud (16a, 16b, 18a, 18b), is inclined with respect to a central plane (X_{B}) of the brake such that a component (K_{P}, K_{P}', K_{R}, K_{R}') of the force (B, B', R, R') acting at said surface (44, 46) biases the brake lining (32a, 32b) into a stable position with respect to the stud (16a, 16b, 18a, 18b).

17. Brake lining (32a, 32b) according to claim 16, **characterized in that**, during the braking, the inner surface (44, 46) runs at an angle with respect to the central plane (X) of the brake lining (32a, 32b), wherein said inner surface (44, 46) in the mounting (40, 40') forms an acute angle (α, β) with said central plane (X).

18. Brake lining according to claim 17, **characterized in that** the angle (α, β) is between 0,5° and 10°, preferably between 2° and 8°, and more preferably between 3° and 6°.

19. Brake lining according to any one of the claims 16 to 18, **characterized in that** the inner surface (44, 46) is essentially flat.

## Revendications

1. Frein à disque comprenant un support de frein qui peut être fixé sur un véhicule et est doté de boulons (16a, 16b, 18a, 18b) servant guider au moins une garniture de frein (32a, 32b) axialement par rapport à un disque de frein (38), la garniture de frein (32a, 32b) présentant des logements (40, 40') pour les boulons (16a, 16b, 18a, 18b), dans lesquels les boulons (16a, 16b, 18a, 18b) viennent en prise, et la garniture de frein (32a, 32b) exerçant lors du freinage des forces de traction et/ou des forces de pression sur les boulons (16a, 16b, 18a, 18b) par l'intermédiaire des surfaces intérieures (44, 46) des logements (40, 40'), **caractérisé en ce que** dans au moins un des logements (40,40') qui vient en butée contre les boulons lors de l'actionnement du frein et touche les boulons (16a, 16b, 18a, 18b) sur une ligne, une surface intérieure (44, 46) est inclinée de telle sorte par rapport à un plan central (X_{B}) du frein qu'une composante (K_{P}, K_{P}'; K_{R}, K_{R}') de la force (B, B' ; R, R') agissant sur ladite surface (44, 46) presse la garniture de frein (32a, 32b) dans une position stable par rapport au boulon (16a, 16b).

2. Frein à disque selon la revendication 1, **caractérisé en ce que** l'angle (α, β) entre la surface intérieure (44, 46) du logement (40,40') et le plan central (X_{B}) du frein à disque part d'une ligne d'appui (49, 50) du boulon entre 1° et 10°, de préférence entre 2° et 8° et encore préférentiellement entre 3° et 6°.

3. Frein à disque selon l'une des revendications précédentes, **caractérisé en ce que** le plan central (X_{B}) du frein à disque constitue également le plan central (X) de la garniture de frein (32a, 32b).

4. Frein à disque selon l'une des revendications précédentes, **caractérisé en ce que** ladite surface intérieure (44, 46) est pour l'essentiel plane.

5. Frein à disque selon l'une des revendications précédentes, **caractérisé en ce qu'**une ligne d'appui (49, 50) des boulons sur ladite surface intérieure est située radialement vers l'intérieur d'un plan (P) qui est sous-tendu par les axes médians des boulons (16a, 16b, 18a, 18b).

6. Frein à disque selon l'une des revendications précédentes, **caractérisé en ce que** la garniture de frein (32a, 32b) comportant les logements (40, 40') peut coulisser radialement sur les boulons (16a, 16b, 18a, 18b).

7. Frein à disque selon l'une des revendications précédentes, **caractérisé en ce que** les logements (40,40') ont un contact linéaire avec chaque boulon (16a, 16b, 18a, 18b) respectivement affecté.

8. Frein à disque selon l'une des revendications précédentes, **caractérisé en ce que** les boulons (16a, 16b, 18a, 18b) et les logements affectés (40, 40') sont disposés sur le côté entrée et sur le côté sortie du frein, et **en ce qu'**au moins les logements situés sur le côté entrée du frein sont formés de telle sorte que ladite composante (K_{P}, K_{R},) de la force (B ; R) y est engendrée.

9. Frein à disque selon l'une des revendications précédentes, **caractérisé en ce que** le boulon situé sur le côté entrée (16b, 18b) et le logement (40') sont disposés de telle sorte l'un par rapport à l'autre que, lors d'un freinage dans le sens de la marche avant du véhicule, des forces de traction de la garniture de frein (32a, 32b) agissent sur le boulon (16b, 18b) depuis ladite surface intérieure (44).

10. Frein à disque selon l'une des revendications précédentes, **caractérisé en ce que** les logements (40, 40') ont la forme d'un U.

11. Frein à disque selon l'une des revendications précédentes, **caractérisé en ce que** les dimensions et les dispositions relatives des boulons (16a, 16b, 18a, 18b) et de la garniture de frein (32a, 32b) sont définies de telle sorte que seules des forces de traction agissent sur la garniture de frein (32a, 32b) lorsqu'est introduite une force de freinage (B_{G}) capable de ralentir le véhicule jusqu'à une valeur d'environ 0,1 g.

12. Frein à disque selon l'une des revendications précédentes, **caractérisé en ce que** le logement (40'), depuis la surface intérieure (46) duquel sont dérivées des forces de pression, est conçu de telle sorte que la force de réaction (R') engendre une composante (K_{R}').

13. Frein à disque selon la revendication 12, **caractérisé en ce qu'**en présence d'une force de freinage (B_{G}) produisant un ralentissement de plus de 0,1 g, des forces de pression agissent sur les boulons situés sur le côté sortie (16a, 18a) depuis la garniture de frein (32a, 32b).

14. Frein à disque selon l'une des revendications précédentes, **caractérisé en ce que** les boulons (16a, 16b, 18a, 18b) sont réalisés à partir d'un autre matériau que le support de frein (10), plus particulièrement à partir d'un acier inoxydable, ou en ce que les boulons sont revêtus d'un matériau inoxydable.

15. Frein à disque selon l'une des revendications précédentes, **caractérisé en ce que** celui-ci se présente sous la forme d'un frein à étrier flottant, d'un frein à cadre flottant ou d'un frein à étrier fixe.

16. Garniture de frein (32a, 32b) destinée à être utilisée dans un frein à disque qui fait s'appuyer la garniture de frein (32a, 32b) sur deux boulons (16a, 16b, 18a, 18b), la garniture de frein présentant des logements (40, 40') pour les boulons (16a, 16b, 18a, 18b), dans lesquels les boulons (16a, 16b, 18a, 18b) viennent en prise et depuis les surfaces intérieures (44, 46) desquels sont exercées lors du freinage des forces de traction et/ou des forces de pression, **caractérisée en ce qu'**une surface intérieure (44, 46) d'au moins un des logements (40, 40') qui vient en butée contre les boulons (16a, 16b, 18a, 18b) lors de l'actionnement du frein, touche le boulon (16a, 16b, 18a, 18b) sur une ligne et est inclinée de telle sorte par rapport à un plan central (X_{B}) du frein qu'une composante (K_{P}, K_{P}'; K_{R}, K_{R}') de la force (B, B' ; R, R') agissant sur ladite surface (44, 46) presse la garniture de frein (32a, 32b) dans une position stable par rapport au boulon (16a, 16b).

17. Garniture de frein (32a, 32b) selon la revendication 16, **caractérisée en ce que**, lorsqu'est actionné le frein, la surface intérieure (44, 46) s'étend dans un angle (α, β) par rapport à un plan central (X) de la garniture de frein (32a, 32b), ladite surface intérieure (44, 46) formant dans le logement (40, 40') avec ledit plan (X) un angle aigu (α, β).

18. Garniture de frein selon la revendication 17, **caractérisée en ce que** l'angle (α, β) se situe entre 0,5° et 10°, de préférence entre 2° et 8° et encore préférentiellement entre 3° et 6°.

19. Garniture de frein selon l'une des revendications 16 à 18, **caractérisée en ce que** la surface intérieure (44, 46) est pour l'essentiel plane.
